# EUROPÄISCHE PATENTSCHRIFT

(11) **EP 4 030 087 B1**
(45) Veröffentlichungstag und Bekanntmachung des Hinweises auf die Patenterteilung: **03.05.2023**
(21) Anmeldenummer: 21151741.2
(22) Anmeldetag: 15.01.2021
(51) Int. Cl.: F16L 11/127, F16L 11/118, F16L 55/26, F16L 25/01, F16L 35/00, B08B 9/043, F16L 101/12, F16L 101/30, F16L 39/02

(54) **SCHLAUCHVORRICHTUNG UND VERFAHREN ZUR HERSTELLUNG EINER SCHLAUCHVORRICHTUNG**
HOSE DEVICE AND METHOD FOR PRODUCING A HOSE DEVICE
DISPOSITIF DE TUYAU SOUPLE ET PROCÉDÉ DE FABRICATION D'UN DISPOSITIF DE TUYAU SOUPLE

(43) Veröffentlichungstag der Anmeldung: 20.07.2022
(73) Patentinhaber: Envirobot GmbH & Co. KG, 87463 Dietmannsried (DE)
(72) Erfinder: MATT, Frank, 87463 Dietmannsried (DE); SPIES, Alexander, 87463 Dietmannsried (DE)
(74) Vertreter: Isarpatent

(56) Entgegenhaltungen:
- US-A- 5 738 149
- US-A1- 2017 128 989
- US-A1- 2019 078 304

## Beschreibung

### Technisches Gebiet

Die vorliegende Erfindung betrifft eine Schlauchvorrichtung zur Reinigung und Inspektion von Rohrleitungen und ein Verfahren zur Herstellung einer Schlauchvorrichtung.

### Stand der Technik

Zur Reinigung und Inspektion von für Menschen unzugänglichen Rohren, Schächten und Kanälen, allgemeiner auch als Rohrleitungen bezeichnet, werden typischerweise kombinierte Reinigungs- und Inspektionssysteme verwendet. Solche Systeme weisen in der Regel eine Schlauchvorrichtung mit einem Betriebsmittelschlauch zum Durchleiten eins Reinigungsfluids oder Betriebsfluids und eine Inspektions- oder Sensoreinrichtung, wie z.B. eine Kamera, oder eine Bearbeitungseinrichtung, wie z.B. einen Fräskopf, auf. Die Reinigungsdüse und Sensoreinrichtung sind am Ende des Betriebsmittelschlauchs angeordnet. Durch den Betriebsmittelschlauch wird das Reinigungsfluid, z.B. Wasser, mit hohem Druck zu der Reinigungsdüse geleitet und durch die Reinigungsdüse in die Rohrleitung ausgestoßen, z.B. um Verschmutzungen oder Verstopfungen zu beseitigen. Die Sensoreinrichtung dient dazu, Verschmutzungen oder dergleichen zu detektieren und/oder eine Rückmeldung über den Reinigungsfortschritt zu geben.

Zur Versorgung der Sensoreinrichtung ist eine Versorgungsleitung, welche elektrische Leiter zur Energieversorgung und zur Übertragung von Signalen aufweisen kann, vorgesehen. Die Versorgungsleitung kann beispielsweise spiralförmig um den Betriebsmittelschlauch gewickelt sein. Insbesondere, wenn der Schlauch in einem drucklosen Zustand zurückgezogen wird, kann der Schlauch an Biegungen der Rohrleitung, z.B. an einem Knie, einem Siphon oder dergleichen, knicken. Insbesondere im Bereich der Düse bzw. der Sensoreinrichtung oder allgemein am Schlauchende kann es vermehrt zum Knicken der Leitung kommen, was zu einer starken mechanischen Beanspruchung der Versorgungsleitung führt.

Die US 9 468 954 B1 beschreibt ein Reinigungs- und Inspektionssystem für Rohre mit einem Versorgungschlauch, an dessen Ende eine Kamera und eine Strahldüse vorgesehen sind, wobei der Versorgungsschlauch einen Innenschlauch, eine Versteifungsstruktur, die durch den Innenschlauch spiralförmig umgebende Stäbe gebildet ist, und einen Außenschlauch aufweist, welcher die Versteifungsstruktur umgibt. Hierbei können Leitungsdrähte zum Signalaustausch mit der Kamera, welche den Innenschlauch spiralförmig umgeben, als Teil der Versteifungsstruktur vorgesehen sein.

In der DE 42 29 787 C2 wird außerdem ein Kanalreinigungssystem offenbart, bei dem ein Kabel zur Versorgung einer Kamera in einen Betriebsmittelschlauch oder in einen den Betriebsmittelschlauch umgebenden Schutzschlauch integriert sein kann.

### Offenbarung der Erfindung

Der vorliegenden Erfindung liegt die Aufgabe zugrunde, verbesserte Lösungen für Schlauchvorrichtungen zur Reinigung und/oder Inspektion von Rohrleitungen bereitzustellen, insbesondere solche Lösungen, bei denen einer Beschädigung von elektrischen Versorgungsleitungen vorgebeugt wird und die eine einfache Herstellung der Schlauchvorrichtung erlauben.

Diese Aufgabe wird gelöst durch die Gegenstände der unabhängigen Patentansprüche.

Gemäß einem ersten Aspekt der Erfindung ist eine Schlauchvorrichtung zur Reinigung und/oder Inspektion von Rohrleitungen vorgesehen. Die erfindungsgemäße Schlauchvorrichtung umfasst einen Innenschlauch zum Durchleiten eines Betriebsfluids, wie z.B. Wasser, und eine Versorgungsleitung, welche mehrere elektrische Leiter aufweist, wobei die Versorgungsleitung in einem Endabschnitt des Innenschlauchs mit einer ersten Schlaglänge und zumindest in einem Mittelbereich des Innenschlauchs mit einer zweiten Schlaglänge spiralförmig um einen Außenumfang des Innenschlauchs gewickelt ist, wobei die erste Schlaglänge kürzer ist als die zweite Schlaglänge. Weiterhin weist die Schlauchvorrichtung einen Außenschlauch, welcher den Innenschlauch und die Versorgungsleitung zumindest in dem Mittelbereich umschließt, und ein Schutzschlauchstück auf, welches den Innenschlauch und die Versorgungsleitung in dem Endabschnitt umschließt.

Gemäß einem zweiten Aspekt der Erfindung ist ein Verfahren zur Herstellung einer Schlauchvorrichtung vorgesehen, insbesondere zum Herstellen der Schlauchvorrichtung nach dem ersten Aspekt der Erfindung. Das Verfahren umfasst ein Ablängen eines Basisschlauchs, welcher einen Innenschlauch zum Durchleiten eines Betriebsfluids, eine mit einer vorbestimmten Schlaglänge spiralförmig um den Innenschlauch gewickelte elektrische Versorgungsleitung, welche mehrere elektrische Leiter aufweist, und einen den Innenschlauch und die Versorgungsleitung umschließenden Außenschlauch aufweist, ein Freilegen der Versorgungsleitung in einem Endabschnitt des Innenschlauchs durch Entfernen des Außenschlauchs von dem Innenschlauch in dem Endabschnitt, und ein Entfernen der Versorgungsleitung von dem Innenschlauch in dessen Endabschnitt. Nach einer ersten Alternative des erfindungsgemäßen Verfahrens erfolgt weiterhin ein Umwickeln des Endabschnitts des Innenschlauchs mit der vom Innenschlauch gelösten Versorgungsleitung, wobei die Versorgungsleitung mit einer gegenüber der vorbestimmten Schlaglänge verringerten Schlaglänge spiralförmig um den Außenumfang des Innenschlauchs gewickelt wird. Nach einer zweiten Alternative des Verfahrens wird die Versorgungsleitung, wenn diese im Endabschnitt des Innenschlauchs von diesem gelöst wurde, an einer Verbindungsstelle durchtrennt und es erfolgt ein elektrisches Verbinden einer Ersatzversorgungsleitung, welche mehrere elektrische Leiter aufweist, mit der Verbindungsstelle der Versorgungsleitung. Nach dieser zweiten Alternative des Verfahrens erfolgt in einem weiteren Schritt ein Umwickeln des Endabschnitts des Innenschlauchs mit der Ersatzversorgungsleitung, wobei die Ersatzversorgungsleitung mit einer gegenüber der vorbestimmten Schlaglänge verringerten Schlaglänge spiralförmig um den Außenumfang des Innenschlauchs gewickelt wird. In beiden Verfahrensalternativen erfolgt abschließend ein Anbringen eines Schutzschlauchstücks an dem Endabschnitt derart, dass das Schutzschlauchstück die Versorgungsleitung oder gegebenenfalls die Ersatzversorgungsleitung und den Innenschlauch umschließt.

Eine der Erfindung zugrundeliegende Idee besteht darin, dass eine Versorgungsleitung, welche mehrere elektrische Leiter zur Signalübertragung und/oder zur Energieversorgung einer Sensoreinrichtung aufweist, in einem Endabschnitt eines Betriebsmittel- oder Hochdruckschlauchs mit einer geringeren Schlaglänge um die Betriebsmittelleitung gewickelt ist, als in einem Mittelbereich oder in der gesamten restlichen Länge des Hochdruckschlauchs. Allgemein ist die Versorgungsleitung spiralförmig um den Außenumfang des Innenschlauchs gewickelt, wobei die Versorgungsleitung in einem Endabschnitt des Innenschlauchs mit einer ersten Schlaglänge und in einem an den Endabschnitt angrenzenden Bereich mit einer zweiten Schlaglänge, die größer als die erste Schlaglänge ist, gewickelt ist. Die Schlaglänge kann hierbei als eine Ganghöhe der Versorgungsleitung verstanden werden, die bei einer vollständigen Windung um eine Längsachse parallel zu der Längsachse gemessen wird, wobei die Längsachse durch den Innenschlauch definiert ist.

Zur Herstellung einer solchen Schlauchvorrichtung ist erfindungsgemäß ein Verfahren vorgesehen, in welchem ein Basisschlauch mit einem Innenschlauch und einem Außenschlauch oder -mantel bzw. einer Außendecke als Ausgangsprodukt dient, wobei der Innenschlauch von einer Versorgungsleitung mit vorbestimmter, langer Schlaglänge umwickelt ist. In dem Verfahren wird der Basisschlauch in einem Endabschnitt abgemantelt, das heißt, der Außenschlauch oder die Außendecke wird entfernt, und die Versorgungsleitung wird im Endabschnitt vom Innenschlauch entfernt, insbesondere von diesem abgelöst. Anschließend wird die vom Innenschlauch gelöste Versorgungsleitung oder eine neue Ersatzversorgungsleitung, die elektrisch mit der bestehenden Versorgungsleitung verbunden wird, in dem Endabschnitt mit verringerter Schlaglänge um den Innenschlauch gewickelt. Wenn eine neue Versorgungsleitung verwendet wird, kann die gelöste Versorgungsleitung an einer Anschlussstelle durchtrennt werden und die Ersatzversorgungsleitung wird elektrisch mit der Anschlussstelle der übrigen Versorgungsleitung verbunden, z.B. durch Crimpen oder Löten. Die neue Versorgungsleitung kann optional an dem Innenschlauch fixiert werden, beispielsweise mittel Klebeband, einem Schrumpfschlauch oder dergleichen. Anschließend wird das Schutzschlauchstück in dem Endabschnitt angebracht.

Ein Vorteil der im Endabschnitt des Innenschlauchs verkürzten Schlaglänge liegt darin, dass die Versorgungsleitung wird in dem Endabschnitt eine effektive Durchbiegung der Versorgungsleitung und damit ein auf die Versorgungsleitung wirkende mechanische Belastung verringert. Somit wird in dem Bereich der Schlauchvorrichtung, in welchem im Betrieb typischerweise die stärksten Biegungen oder Knicke bzw. die kleinsten Biegeradien auftreten, eine Belastung der Versorgungsleitung vorteilhaft verringert. Damit wird die Wahrscheinlichkeit eines Bruchs oder allgemein einer Beschädigung der elektrischen Leiter der Versorgungsleitung verringert.

Ein weiterer Vorteil besteht darin, dass durch die Verringerung der Schlaglänge lediglich im Endabschnitt des Innenschlauchs die Gesamtlänge der Versorgungsleitung im Vergleich zu einer Umwicklung mit konstanter Schlaglänge lediglich minimal verlängert wird. Dies ist einerseits ein Kostenvorteil. Andererseits wird dadurch erleichtert, dass die elektrischen Eigenschaften der Versorgungsleitung, wie Induktivität, Kapazität und Ohm'scher Widerstand, in einem günstigen Bereich liegen.

Ein weiterer Vorteil der Erfindung liegt in der einfachen Herstellbarkeit der Schlauchvorrichtung. Insbesondere kann eine in einem großindustriellen Verfahren günstig herstellbarer Basisschlauch als Ausgangsprodukt verwendet werden, welcher lediglich in seinem Endabschnitt oder Endbereich bearbeitet wird.

Vorteilhafte Ausführungsformen, Varianten, Modifikationen und Weiterbildungen ergeben sich aus den Unteransprüchen sowie aus der Beschreibung unter Bezugnahme auf die Figuren.

Gemäß manchen Ausführungsformen kann vorgesehen sein, dass die erste Schlaglänge in einem Bereich zwischen 3 mm und 40 mm, insbesondere zwischen 10 mm und 20 mm und vorzugsweise zwischen 14 mm und 16 mm liegt. In dem Bereich zwischen 3 mm und 40 mm wird zuverlässig eine Unterschreitung des minimalen Biegeradius der elektrischen Leiter der Versorgungsleitung vermieden. Weiter vorteilhaft hat sich der Bereich zwischen 10 mm und 20 mm für die erste Schlaglänge erwiesen, da hierbei bei relativ wenig zusätzlichem Material für die Versorgungsleitung äußerst zuverlässig eine Unterschreitung des minimalen Biegeradius der elektrischen Leiter der Versorgungsleitung vermieden wird. Der Bereich zwischen 14 mm und 16 mm lässt sich vorteilhaft sehr einfach bei der Herstellung realisieren. Weiterhin wurde festgestellt, dass hierbei die elektrischen Eigenschaften der Versorgungsleitung, wie Induktivität, Kapazität und Widerstand im Vergleich zu Schläuchen mit einer einheitlichen Schlaglänge überraschend wenig beeinflusst werden.

Gemäß manchen Ausführungsformen kann vorgesehen sein, dass die zweite Schlaglänge in einem Bereich zwischen 30 mm und 100 mm, insbesondere zwischen 40 mm und 60 mm und vorzugsweise zwischen 45 mm und 55 mm liegt. Die angegebenen Bereiche sind insbesondere hinsichtlich der Herstellbarkeit und des Materialverbrauchs für die Versorgungsleitung vorteilhaft. Weiterhin wird insbesondere in dem Bereich zwischen 45 mm und 55 mm für die zweite Schlaglänge sehr zuverlässig in Unterschreiten des minimalen Biegeradius für die elektrischen Leiter vermieden. Unabhängig von dem konkreten Betrag der ersten und der zweiten Schlaglängen gilt, dass die erste Schlaglänge kürzer als die zweite Schlaglänge ist.

Gemäß manchen Ausführungsformen kann die Schlauchvorrichtung ein Verbindungsstück aufweisen, welches den Außenschlauch in einem dem Schutzschlauchstück zugewandt gelegenen Verbindungsendbereich und das Schutzschlauchstück in einem dem Außenschlauch zugewandt gelegenen Verbindungsendbereich umschließt und mit den Verbindungsendbereichen jeweils verbunden ist, beispielsweise verpresst ist. Gemäß manchen Ausführungsformen kann das Verfahren ein Verbinden, beispielsweise ein Verpressen eines Verbindungsstücks mit dem Außenschlauch und dem Schutzschlauchstück umfassen. Das Verbindungsstück kann beispielsweise als eine Muffe realisiert sein, welche den Außenumfang des Schutzschlauchstücks und den Außenumfang des Außenschlauchs jeweils in angrenzenden Endbereichen umschließt. Der dem Schutzschlauchstück zugewandt gelegene Verbindungsendbereich des Außenschlauchs und der dem Außenschlauch zugewandt gelegene Verbindungsendbereich des Schutzschlauchstücks sind somit von entgegengesetzten Seiten her in eine Öffnung des Verbindungsstücks eingeführt. Die Öffnung des Verbindungsstücks und die jeweiligen Außendurchmesser von Schutzschlauchstück und Außenschlauch können jeweils eine Presspassung ausbilden, welche z.B. durch Verpressen hergestellt werden kann. Somit ist das Verbindungsstück reibschlüssig mit dem Schutzschlauchstück und dem Außenschlauch verbunden. Beim Verpressen wird das Verbindungsstück mittels eines Werkzeugs senkrecht zum Außenumfang der Verbindungsendbereiche derart zusammengepresst und plastisch verformt, dass ein Innendurchmesser der Öffnung des Verbindungsstücks verringert wird und eine Presspassung zwischen dem Innendurchmesser der Öffnung und dem jeweiligen Außendurchmesser von Schutzschlauchstück und Außenschlauch ausgebildet wird.

Gemäß manchen Ausführungsformen kann die Schlauchvorrichtung eine Stützhülse aufweisen, welche in dem Innenschlauch überlappend zu dem Verbindungsstück angeordnet ist. Die Stützhülse ist somit in dem Innenschlauch angeordnet und liegt vorzugsweise an einer Innenumfangsfläche des Innenschlauchs an. In Bezug auf eine Längsrichtung der Schlauchvorrichtung ist die Stützhülse überlappend zu dem Verbindungsstück angeordnet, insbesondere derart, dass sie die Verbindungsendbereiche des Schutzschlauchstücks und des Außenschlauchs jeweils überlappt. Die Stützhülse, welche z.B. aus einem Metallmaterial oder einem steifen Kunststoffmaterial gebildet sein kann, bietet den Vorteil, dass sie im Bereich des Übergangs zwischen Schutzschlauchstück und Außenschlauch eine mechanische Stütze bildet. Insbesondere, wird dadurch auch die reibschlüssige Fixierung, z.B. durch Verpressen, des Verbindungsstücks mit den Verbindungsendbereichen des Schutzschlauchstücks und des Außenschlauchs erleichtert.

Gemäß manchen Ausführungsformen kann die Schlauchvorrichtung einen im Bereich des Verbindungsstücks zwischen dem Schutzschlauchstück und dem Innenschlauch angeordneten ersten Abstandshalter aufweisen, welcher den Außenumfang des Innenschlauchs zumindest einmal umschließt und sich parallel zu der Versorgungsleitung erstreckt, wobei der erste Abstandshalter eine Dicke aufweist, die derart dimensioniert ist, dass der Abstandshalter von dem Außenumfang des Innenschlauchs zumindest genausoweit vorsteht, wie die Versorgungsleitung. Gemäß manchen Ausführungsformen kann das Verfahren ein Anbringen eines Abstandshalters zwischen dem Außenumfang des Innenschlauchs und dem Schutzschlauchstück im Bereich des Verbindungsstücks umfassen. Der Abstandshalter kann beispielsweise durch ein spiralförmiges Band gestaltet sein, welches den Außenumfang des Innenschlauchs parallel zu der Versorgungsleitung zumindest einmal umschließt. Der Abstandshalter ist in Bezug auf die Längsrichtung der Schlauchvorrichtung in dem Verbindungsendbereich des Schutzschlauchstücks angeordnet. Somit überlappt der Abstandshalter in der Längsrichtung mit dem Verbindungsstück. Der Abstandshalter steht zudem von dem Außenumfang des Innenschlauchs um eine erste Höhe vor, welche größer ist als eine Höhe, um welche die Versorgungsleitung von dem Außenumfang vorsteht. Somit wird, wenn das Verbindungsstück reibschlüssig mit dem Schutzschlauchstück verbunden wird, z.B. durch Verpressen, eine mechanische Belastung von dem Abstandshalter aufgenommen und nicht von der Versorgungsleitung. Dies erleichtert die Herstellung der Schlauchvorrichtung. Weiterhin wird durch den Abstandshalter eine Reibung der Versorgungsleitung am Schutzschlauchstück in dem Übergangsbereich zwischen Schutzschlauchstück und Außenschlauch vermieden, wodurch einer Beschädigung der elektrischen Leiter der Versorgungsleitung noch besser entgegengewirkt wird.

Gemäß manchen Ausführungsformen kann die Schlauchvorrichtung eine in dem Endabschnitt mit dem Innenschlauch verbundene Kupplungseinrichtung aufweisen, welche zur mechanischen Kopplung mit einer Düse eingerichtet ist und eine elektrisch mit der Versorgungsleitung verbundene elektrische Schnittstelle aufweist. Die Kupplungseinrichtung somit einerseits zur fluidleitenden Verbindung der Düse mit dem Innenschlauch und zur Fixierung der Düse eingerichtet. Andererseits dient die Kupplungseinrichtung auch zum Anschluss und optional zur Fixierung einer Sensoreinrichtung, wie z.B. eine Kamera. Gemäß manchen Ausführungsformen kann das Verfahren ein Verbinden einer Kupplungseinrichtung, welche zur mechanischen Kopplung mit einer Düse eingerichtet ist und eine elektrische Schnittstelle aufweist, mit dem Innenschlauch erfolgen, wobei ein Hülsenstück der Kupplungseinrichtung mit dem Innenschlauch verbunden und ein Mantelstück der Kupplungseinrichtung mit dem Schutzschlauchstück verbunden, vorzugsweise verpresst wird. Die Ersatzversorgungsleitung oder die Versorgungsleitung kann beispielsweise mit der elektrischen Schnittstelle elektrisch verbunden werden.

Gemäß manchen Ausführungsformen kann vorgesehen sein, dass die Kupplungseinrichtung ein in den Innenschlauch hineinragendes Hülsenstück und ein mit einem Außenumfang des Schutzschlauchstücks verbundenes, insbesondere verpresstes Mantelstück aufweist. Die Kupplungseinrichtung kann somit als eine Art Doppelhülsenkörper mit einer Innenhülse, die in den Innenschlauch eingeführt ist, und einer Außenhülse als Mantelstück ausgeführt sein, wobei die Außenhülse den Außenumfang des Schutzschlauchs umschließt und mit diesem verbunden ist, vorzugsweise Reibschlüssig, z.B. durch Verpressen.

Gemäß manchen Ausführungsformen kann die Schlauchvorrichtung einen im Bereich des Mantelstücks der Kupplungseinrichtung zwischen dem Schutzschlauchstück und dem Innenschlauch angeordneten zweiten Abstandshalter aufweisen, welcher den Außenumfang des Innenschlauchs zumindest einmal umschließt und sich parallel zu der Versorgungsleitung erstreckt, wobei der zweite Abstandshalter eine Dicke aufweist, die derart dimensioniert ist, dass der Abstandshalter von dem Außenumfang des Innenschlauchs zumindest genausoweit vorsteht, wie die Versorgungsleitung. Gemäß manchen Ausführungsformen kann das Verfahren ein Anbringen eines zweiten Abstandshalters zwischen dem Außenumfang des Innenschlauchs und dem Schutzschlauchstück im Bereich des Mantelstücks der Kupplungseinrichtung umfassen. Der zweite Abstandshalter kann, ähnlich wie der erste Abstandshalter, durch ein spiralförmiges Band gestaltet sein, welches den Außenumfang des Innenschlauchs parallel zu der Versorgungsleitung zumindest einmal umschließt. Der zweite Abstandshalter ist in Bezug auf die Längsrichtung der Schlauchvorrichtung nahe des Endes des Innenschlauchs angeordnet. Somit überlappt der Abstandshalter in der Längsrichtung mit der Kupplungseinrichtung, insbesondere mit dem Mantelstück. Der zweite Abstandshalter steht zudem von dem Außenumfang des Innenschlauchs um eine zweite Höhe vor, welche größer ist als eine Höhe, um welche die Versorgungsleitung von dem Außenumfang vorsteht. Wie bereits im Zusammenhang mit dem ersten Abstandshalter erläutert, wird dadurch die Herstellung der Schlauchvorrichtung erleichtert und die elektrischen Leiter der Versorgungsleitung werden in weiter verbesserter Weise geschützt.

Gemäß manchen Ausführungsformen kann vorgesehen sein, dass die elektrische Schnittstelle der Kupplungseinrichtung eine Leiterplatte mit einer Ausnehmung aufweist, durch welche das Hülsenstück hindurch ragt. Dadurch wird eine äußerst platzsparende Unterbringung der Leiterplatte in der Kupplungseinrichtung erzielt. Die Versorgungsleitung kann beispielsweise über das Ende des Innenschlauchs vorstehen und innerhalb der Kupplungseinrichtung zu der Leiterplatte hin verlegt sein.

Gemäß manchen Ausführungsformen kann vorgesehen sein, dass das Schutzschlauchstück aus einem Elastomermaterial gebildet ist, in welches ein Metallgewebe eingebettet ist. Beispielsweise kann das Elastomermaterial auf das Metallgewebe aufvulkanisiert sein. Somit ergibt sich ein mechanisch sehr robuster Aufbau des Schutzschlauchstücks, wodurch die Versorgungsleitung insbesondere in dem für starke Biegungen anfälligen Endabschnitt noch besser geschützt wird.

Die obigen Ausführungsformen, Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der Erfindung hinzufügen. Weiterhin sind die im Zusammenhang mit der Schlauchvorrichtung offenbarten Merkmale und Vorteil auch für das Verfahren offenbart und umgekehrt.

### Kurze Beschreibung der Zeichnungen

Weitere Merkmale und Vorteile der Erfindung werden nachfolgend anhand der Figuren erläutert. Dabei zeigen:
- Fig.1: eine schematische Schnittansicht einer Schlauchvorrichtung gemäß einem Ausführungsbeispiel der Erfindung;
- Fig. 2: eine schematische Explosionsdarstellung der in Fig. 1 gezeigten Schlauchvorrichtung;
- Fig. 3: eine schematische Darstellung des Schritts eines Ablängens eines Basisschlauchs in einem Verfahren zur Herstellung einer Schlauchvorrichtung gemäß einem Ausführungsbeispiel der Erfindung;
- Fig. 4: eine schematische Schnittdarstellung des abgelängten Basisschlauchs aus Fig. 3;
- Fig. 5: eine schematische Darstellung des Schritts eines Entfernens eines Außenschlauchs von dem in Fig. 4 gezeigten Basisschlauch;
- Fig. 6: eine schematische Darstellung des Schritts eines Entfernens einer Versorgungsleitung im Endabschnitt eines Innenschlauchs des in Fig. 5 gezeigten Basisschlauchs;
- Fig. 7: eine schematische Darstellung des Schritts eines Umwickelns des Endabschnitts des Innenschlauchs des in Fig. 6 gezeigten Basisschlauchs mit einer Ersatzversorgungsleitung; und
- Fig. 8: eine schematische Darstellung des Schritts eines Anbringens eines Schutzschlauchstücks im Endabschnitt des Innenschlauchs des in Fig. 7 gezeigten Basisschlauchs; und
- Fig. 9: eine schematische Schnittansicht einer Versorgungsleitung einer Schlauchvorrichtung gemäß einem Ausführungsbeispiel der Erfindung.

In den Figuren bezeichnen gleiche Bezugszeichen gleiche oder gleichartige Elemente. Die Zeichnungen sind nicht notwendigerweise maßstabsgetreu zu verstehen, können aber in einigen Ausführungsformen maßstabsgetreu verwendet werden. Nummerierungen von Verfahrensschritten dienen der besseren Verständlichkeit, implizieren aber nicht notwendiger Weise eine bestimmte Reihenfolge, sofern sich nicht inhaltlich etwas anderes ergibt.

### Beschreibung von Ausführungsbeispielen

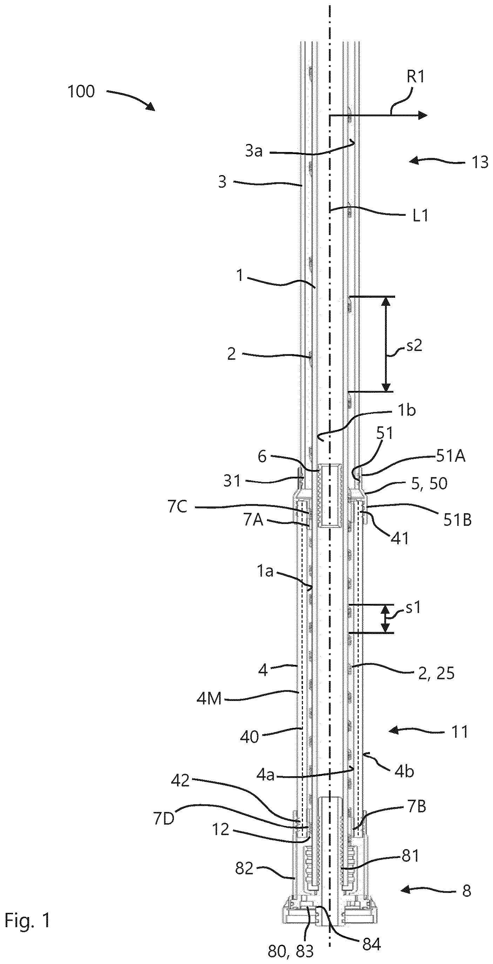

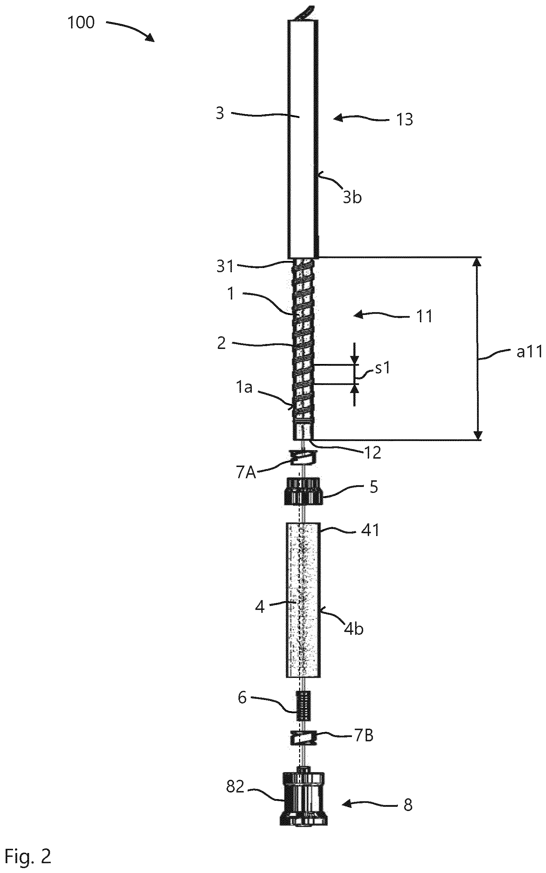

Fig. 1 zeigt rein beispielhaft eine Schlauchvorrichtung 100 zur Reinigung und/oder Inspektion von Rohrleitungen. Fig. 2 zeigt eine Explosionsansicht der in Fig. 1 gezeigten Schlauchvorrichtung 100. Die Schlauchvorrichtung 100 ist für den Anschluss einer Reinigungs- und/oder Inspektionseinrichtung, z.B. einer Reinigungsdüse, eines Fräsers, jeweils mit oder ohne Kamera, vorgesehen.

Wie in den Fign. 1 und 2 beispielhaft gezeigt, umfasst die Schlauchvorrichtung 100 einen Innenschlauch 1, eine Versorgungsleitung 2, einen Außenschlauch 3 und ein Schutzschlauchstück 4. Wie in den Fign. 1 und 2 weiterhin erkennbar ist, kann die Schlauchvorrichtung 100 ein optionales Verbindungsstück 5 und/oder eine optionale Stützhülse 6 und/oder eine optionale Kupplungseinrichtung 8 aufweisen. Wie insbesondere in Fig. 2 erkennbar ist, kann außerdem ein erster Abstandshalter 7A und/oder ein zweiter Abstandshalter 7B vorgesehen sein.

Der Innenschlauch 1 dient zum Durchleiten eines Betriebsfluids wie z.B. Wasser und kann beispielsweise als durchgehender Schlauch oder mehrere miteinander verbundenen Schlauchstücke realisiert sein. Wie in Fig. 1 beispielhaft gezeigt, weißt der Innenschlauch 1 eine Außenumfangsfläche 1a und eine Innenumfangsfläche 1b. Die Innenumfangsfläche 1b definiert einen vorzugsweise kreisförmigen Innenquerschnitt eines Kanals zum Durchleiten des Betriebsfluids. Wie in Fig. 1 ferner schematisch gezeigt, kann die Innenumfangsfläche 1b eine Längsachse L1 definieren. Die Außenumfangsfläche 1b definiert eine Außenumfangsform bzw. einen Außenquerschnitt des Innenschlauchs 1, welcher ebenfalls kreisförmig sein kann, wie dies in den Fign. 1 und 2 beispielhaft gezeigt ist. Der Innenschlauch 1 ist aus einem flexiblen Kunststoffmaterial gebildet, z.B. aus einem Elastomermaterial.

Allgemein erstreckt sich der Innenschlauch 1 zwischen einem ersten Ende 12 und einem in Bezug auf die Längsachse L1 entgegengesetzten zweiten Ende (nicht gezeigt). In den Fign. 1 und 2 ist jeweils ein Endabschnitt 11 des Innenschlauchs 1 dargestellt, welcher sich von dem ersten Ende 12 aus erstreckt. An den Endabschnitt 11, welcher eine vorbestimmten Länge a11, z.B. in einem Bereich zwischen 5 cm und 15 cm aufweisen kann, schließt sich entlang der Längsachse L1 ein Mittelbereich oder Restbereich 13 an. Der Mittelbereich 13 kann beispielsweise an dem zweiten Ende enden oder an einem zweiten Endabschnitt (nicht gezeigt).

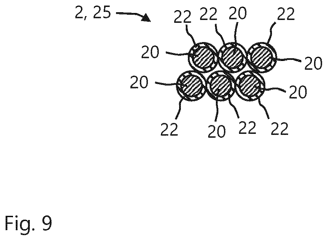

Die Versorgungsleitung 2 ist in den Fign. 1 und 2 lediglich schematisch dargestellt und ist allgemein als eine mehrere elektrische Leiter 20 aufweisende Leitung realisiert. In Fig. 9 ist rein beispielhaft eine Schnittansicht einer Versorgungsleitung 2 dargestellt. Wie in Fig. 9 schematisch gezeigt, kann die Versorgungsleitung 2 mehrere elektrische Leiterstränge 20 aufweisen, welche jeweils elektrisch voneinander isoliert sind, z.B. indem jeder Leiterstrang durch eine Isolierschicht 22 aus elektrisch isolierendem Material ummantelt ist. Beispielsweise können insgesamt sechs Leiterstränge 20 vorgesehen sein, wobei jeweils zwei Leiterstränge 20 zur elektrischen Energieversorgung einer Sensoreinrichtung, wie z.B. einer Kamera, zur Übertragung von mittels der Sensoreinrichtung erfassten Daten, z.B. von Bilddaten, und zur Übertragung von Steuersignalen zur Ansteuerung der Sensoreinrichtung vorgesehen sein können.

Wie in den Fign. 1 und 2 schematisch dargestellt, ist die Versorgungsleitung 2 spiralförmig um den Außenumfang 1a des Innenschlauchs 1 gewickelt. Insbesondere liegt die Versorgungsleitung 2 an dem Außenumfang bzw. der Außenumfangsfläche 1a an und kann insbesondere daran befestigt sein, z.B. mittels eines Klebstoffs oder indem die Isolierschicht 22 mit dem Innenschlauch 1 verschmolzen ist.

Wie in Fig. 1 beispielhaft dargestellt, ist die Versorgungsleitung 2 in dem Endabschnitt 11 des Innenschlauchs 1 mit einer ersten Schlaglänge s1 und in dem Mittelbereich 13 des Innenschlauchs 1 mit einer zweiten Schlaglänge s2 spiralförmig um einen Außenumfang 1a des Innenschlauchs 1 gewickelt. Wie in Fig. 1 gezeigt, ist die erste Schlaglänge s1 kürzer ist als die zweite Schlaglänge s2. Beispielsweise kann die erste Schlaglänge s1 in einem Bereich zwischen 3 mm und 40 mm, insbesondere zwischen 10 mm und 20 mm und vorzugsweise zwischen 14 mm und 16 mm liegen. Die zweite Schlaglänge s2 kann beispielsweise in einem Bereich zwischen 30 mm und 100 mm, insbesondere zwischen 40 mm und 60 mm und vorzugsweise zwischen 45 mm und 55 mm liegen. Somit ist die Schlaglänge s1, mit der die Versorgungsleitung 2 um den Innenschlauch 1 gewickelt ist, in dem Endabschnitt 11 verkürzt im Vergleich zumindest zu dem Mittelbereich 13 und vorzugsweise im Vergleich zur gesamten restlichen Länge des Innenschlauchs 1. Die Schlaglänge kann hierbei als eine Ganghöhe der Versorgungsleitung 2 verstanden werden, die bei einer vollständigen Windung um die Längsachse L1 parallel zu der Längsachse L1 gemessen wird.

Der Außenschlauch 3, welcher auch als Außenmantel oder als Außendecke bezeichnet werden kann, ist insbesondere zum mechanischen Schutz und zur Versteifung des Innenschlauchs 1 vorgesehen und umschließt zumindest in dem Mittelbereich des Innenschlauchs 1 den Außenumfang 1a des Innenschlauchs 1 vollständig. In Bezug auf eine sich senkrecht zur Längsachse L1 ersteckende radiale Richtung R1 ist der Innenschlauch 1 somit innerhalb des Außenschlauchs 3 bzw. in einem Innenraum angeordnet, der durch eine Innenumfangsfläche 3a des Außenschlauchs 3 definiert ist. Die Innenumfangsfläche 3a des Außenschlauchs 3 und die Außenumfangsfläche 1a des Innenschlauchs 1 können zumindest in dem Mittelbereich 13 des Innenschlauchs 1 zumindest abschnittsweise verbunden sein. Wie in den Fign. 1 und 2 beispielhaft und schematisch gezeigt, endet der Außenschlauch 3 an dem Endabschnitt 11 bzw. beabstandet zu dem ersten Ende 12 des Innenschlauchs 1. Die Versorgungsleitung 2 ist in dem Mittelbereich 13 in Bezug auf die radiale Richtung R1 zwischen dem Innenschlauch 1 und dem Außenschlauch 3, insbesondere zwischen der Außenumfangsfläche 1a des Innenschlauchs 1 und der Innenumfangsfläche 3a des Außenschlauchs 3 angeordnet. Der Außenschlauch 3 kann aus einem Kunststoffmaterial, z.B. aus Polyurethan oder dergleichen, gebildet sein.

Das Schutzschlauchstück 4 ist ein mechanisch robustes Schlauchstück, welches einen durch eine Innenumfangsfläche 4a definierten Innenquerschnitt, und einen durch eine Außenumfangsfläche 4b definierten Außenquerschnitt aufweist. Der Innen- und der Außenquerschnitt können beispielsweise jeweils kreisförmig sein, wie dies in den Fign. 1 und 2 gezeigt ist. Das Schutzschlauchstück 4 kann aus einem Elastomermaterial 4M gebildet sein, in welches ein Metallgewebe 40 eingebettet ist, wie dies in Fig. 1 rein schematisch dargestellt ist.

Wie insbesondere in Fig. 1 erkennbar ist, ragt der Endabschnitt 11 des Innenschlauchs 1 in den durch die Innenumfangsfläche 4a definierten Innenraum hinein bzw. ragt durch diesen hindurch. Der Schutzschlauch 4 umschließt somit den Innenschlauch 1 und die Versorgungsleitung 2 in dem Endabschnitt 11 des Innenschlauchs 1. Die Versorgungsleitung 2 ist in dem Endabschnitt 11 des Innenschlauchs 1 in Bezug auf die radiale Richtung R1 zwischen dem Innenschlauch 1 und dem Schutzschlauchstück 4, insbesondere zwischen der Außenumfangsfläche 1a des Innenschlauchs 1 und der Innenumfangsfläche 4a des Schutzschlauchstücks 4 angeordnet.

Das optionale Verbindungsstück 5 kann beispielsweise als eine Muffe oder Hülse 50 realisiert sein, welche eine Durchgangsöffnung 51 definiert, wie dies in den Fign. 1 und 2 beispielhaft gezeigt ist. Wie in Fig. 1 erkennbar, ragen jeweils ein dem Schutzschlauchstück 4 zugewandt gelegener Verbindungsendbereich 31 des Außenschlauchs 3 und ein dem Außenschlauch 3 zugewandt gelegenen Verbindungsendbereich 41 des Schutzschlauchstücks 4 von entgegengesetzten Seiten her in die Durchgangsöffnung 51 der Muffe 50 hinein. Ein Innendurchmesser der Öffnung 51 ist dabei jeweils an den durch die Außenumfangsflächen 3a, 4a von Außenschlauch 3 und Schutzschlauchstück 4 definierten Außendurchmesser derart angepasst, dass sich eine reibschlüssige Verbindung zwischen Schutzschlauchstück 4 und Verbindungsstück 5 und zwischen Außenschlauch 3 und Verbindungsstück 5 ergibt. Dabei kann der Innendurchmesser 51 bereichsweise unterschiedlich sein, wie dies in den Fign. 1 und 2 beispielhaft gezeigt ist. Insbesondere können ein erster Bereich 51A mit einem ersten Innendurchmesser und ein zweiter Bereich 51B mit einem zweiten Innendurchmesser, der größer als der erste Innendurchmesser ist, vorgesehen sein. Das Verbindungsstück 5 kann mit dem Schutzschlauchstück 4 und dem Außenschlauch 3 beispielsweise verpresst sein.

Die optionale Stützhülse 6 ist in dem durch die Innenumfangsfläche 1b definierten Innenraum des Innenschlauchs 1 angeordnet. Insbesondere kann die Stützhülse 6 an der Innenumfangsfläche 1b des Innenschlauchs 1 anliegen, wie dies in Fig. 1. In Bezug auf die Längsachse L1 kann die Stützhülse 6 insbesondere überlappend zu dem optionalen Verbindungsstück 5 angeordnet sein. Wie in Fig. 1 erkennbar, kann die Stützhülse 6 sich somit in den Verbindungsendbereichen 31, 41 von Außenschlauch 3 und Schutzschlauchstück 4 erstrecken. Die Stützhülse 6 stützt somit den Innenschlauch 1 in Bezug auf die radiale Richtung R1, was insbesondere beim Verpressen des Verbindungsstücks 5 vorteilhaft ist.

Die optionalen ersten und zweiten Abstandshalter 7A, 7B können jeweils als bandförmige Teile realisiert sein, die sich spiralförmig erstrecken, wie dies in Fig. 2 schematisch dargestellt ist. Wie in Fig. 1 schematisch gezeigt, kann der erste Abstandshalter 7A in Bezug auf die Längsachse L1 im Bereich des Verbindungsstücks 5 bzw. an einem dem Mittelbereich 13 zugewandt gelegenen Ende des Endabschnitts 11 des Innenschlauchs 1 angeordnet sein. Wie in Fig. 1 außerdem gezeigt ist, umschließt der erste Abstandshalter 7A den Außenumfang 1a des Innenschlauchs 1 zumindest einmal und erstreckt sich parallel zu der Versorgungsleitung 2. Insbesondere verläuft die Versorgungsleitung 2 in durch den Abstandshalter 7A definierten Zwischenräumen 7C. Der zweite Abstandshalter 7B ist in Bezug auf die radiale Richtung R1 somit zwischen dem Schutzschlauchstück 4 und dem Innenschlauch 1, insbesondere zwischen der Außenumfangsfläche 1a des Innenschlauchs 1 und der Innenumfangsfläche 4a des Schutzschlauchstücks 4 angeordnet. Wie in Fig. 1 ferner gezeigt ist, weist der erste Abstandshalter 7A eine Dicke auf, die derart dimensioniert ist, dass der Abstandshalter 7A von dem Außenumfang 1a des Innenschlauchs 1 zumindest genausoweit vorsteht, wie die Versorgungsleitung 2. Das heißt, die Innenumfangsfläche 4a des Schutzschlauchstücks 4 liegt im Bereich des ersten Abstandshalter 7A an diesem an, und vorzugsweise nicht an der Versorgungsleitung 2. Somit verhindert der Abstandshalter 7A eine übermäßige Belastung der Versorgungsleitung 2 in radialer Richtung R1, wenn das Verbindungsstück 5 verpresst wird.

Der zweite Abstandshalter 7B kann in Bezug auf die Längsachse L1 im Bereich des ersten Endes 12 des Innenschlauchs 1 angeordnet sein, wie dies in Fig. 1 beispielhaft gezeigt ist. Auch der zweite Abstandshalter 7B umschließt den Außenumfang 1a des Innenschlauchs 1 zumindest einmal und erstreckt sich parallel zu der Versorgungsleitung 2, so dass die Versorgungsleitung 2 in durch den Abstandshalter 7B definierten Zwischenräumen 7D verläuft. Der zweite Abstandshalter 7B ist in Bezug auf die radiale Richtung R1 somit zwischen dem Schutzschlauchstück 4 und dem Innenschlauch 1, insbesondere zwischen der Außenumfangsfläche 1a des Innenschlauchs 1 und der Innenumfangsfläche 4a des Schutzschlauchstücks 4 angeordnet. Der zweite Abstandshalter 7B weist eine Dicke auf, die derart dimensioniert ist, dass der Abstandshalter 7B von dem Außenumfang 1a des Innenschlauchs 1 zumindest genausoweit vorsteht, wie die Versorgungsleitung 2. Somit wird auch im Bereich des ersten Endes 12 des Innenschlauchs 1 ein mechanischer Schutz der Versorgungsleitung 2 in Bezug auf eine Belastung in der radialen Richtung R1 erzielt.

Die optionale Kupplungseinrichtung 8 kann beispielsweise ein Hülsenstück 81 und ein Mantelstück 82 aufweisen, wie dies in Fig. 1 beispielhaft gezeigt ist. Das Hülsenstück 81 ragt von dem ersten Ende 12 her in den Innenschlauch 1 hinein und liegt insbesondere an der Innenumfangsfläche 1b des Innenschlauchs an. Das Mantelstück 82 ist ebenfalls hülsenförmig ausgebildet, wobei ein abgewandt von dem Außenschlauch 3 gelegener Endbereich 42 des Schutzschlauchstücks 4 in das Mantelstück 82 hineinragt und mit diesem vorzugsweise reinschlüssig verbunden ist, z.B. durch Verpressen. Der optionale zweite Abstandshalter 7B kann in Bezug auf die Längsachse L1 insbesondere im Bereich des Mantelstücks 82 angeordnet sein, wie dies in Fig. 1 beispielhaft gezeigt ist. Allgemein ist die Kupplungseinrichtung 8 somit in dem Endabschnitt 11 mit dem Innenschlauch 1 und vorzugsweise auch dem Schutzschlauchstück 4 verbunden und zur mechanischen Kopplung mit einer Düse (nicht gezeigt) eingerichtet.

Die Kupplungseinrichtung 8 weit ferner eine elektrisch mit der Versorgungsleitung 2 verbundene elektrische Schnittstelle 80 auf, an welche eine Sensoreinrichtung, wie z.B. eine Kamera anschließbar ist. Beispielsweise kann die die elektrische Schnittstelle 80 an eine Leiterplatte 83 ausgebildet sein, die zwischen dem Hülsenstück 81 und dem Mantelstück 82 angeordnet ist. Insbesondere kann die Leiterplatte 83 sich in der radialen Richtung R1 erstrecken, wobei vorgesehen sein kann, dass die Leiterplatte 83 eine Ausnehmung 84 aufweist, durch welche das Hülsenstück 81 hindurch ragt, wie dies in Fig. 1 beispielhaft gezeigt ist. Die Versorgungsleitung 2 kann innerhalb der Kupplungseinrichtung 8 getrennt von dem Innenschlauch 1 verlaufen und zu dem der Leiterplatte 83 geführt sein.

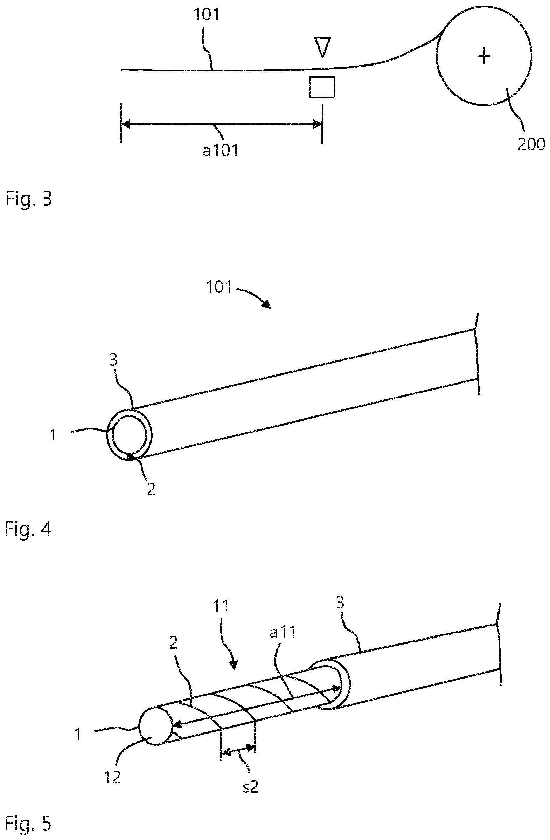

In den Fign. 3 bis 8 ist rein schematisch ein Ablauf eines Verfahrens zur Herstellung einer Schlauchvorrichtung 100 dargestellt, welcher im Folgenden rein beispielhaft unter Bezugnahme auf die in den Fign. 1 und 2 gezeigte Schlauchvorrichtung 100 erläutert wird.

In einem ersten Schritt erfolgt ein Ablängen eines Basisschlauchs 101. Der Basisschlauch 101 weist, wie oben beschrieben den Innenschlauch 1 und den Außenschlauch 3 auf, wobei der Innenschlauch 1 des Basisschlauchs 101 durchgehend mit der zweiten Schlaglänge s2 spiralförmig von der Versorgungsleitung 2 umwickelt ist. Wie in Fig. 3 beispielhaft gezeigt, kann der Basisschlauch 101 z.B. auf einer Trommel 200 gelagert sein. Zum Ablängen kann der Basisschlauch 101 von der Trommel 200 abgezogen und mittels einer Ablängvorrichtung 202, welche in Fig. 2 lediglich symbolisch dargestellt ist, ein Abschnitt vorbestimmter Länge a101 abgetrennt werden. Beispielsweise kann zum Ablängen eine Schneidvorrichtung verwendet werden. Fig. 4 zeigt rein schematisch eine Ansicht einer Trennfläche, an welcher der Basisschlauch 101 abgelängt wurde. In der Trennfläche ist ein Ende der Versorgungsleitung 2 sichtbar.

In einem nächsten Schritt erfolgt ein Freilegen der Versorgungsleitung 2 in einem Endabschnitt 11 des Innenschlauchs 1. Wie in Fig. 5 schematisch gezeigt ist, wird zum Freilegen der Versorgungsleitung in dem Endabschnitt 11 der Außenschlauchs 3 von dem Innenschlauch 1 entfernt. Beispielsweise kann der Außenschlauch 3 in einem vorbestimmten Abstand a11 vom Ende 12 durchtrennt und von dem Innenschlauch 1 abgezogen werden. Wie in Fig. 5 erkennbar, wird dadurch in dem Endabschnitt die Versorgungsleitung 2, die den Außenumfang 1a des Innenschlauchs 1 spiralförmig mit der zweiten Schlaglänge s2 umschließt, freigelegt.

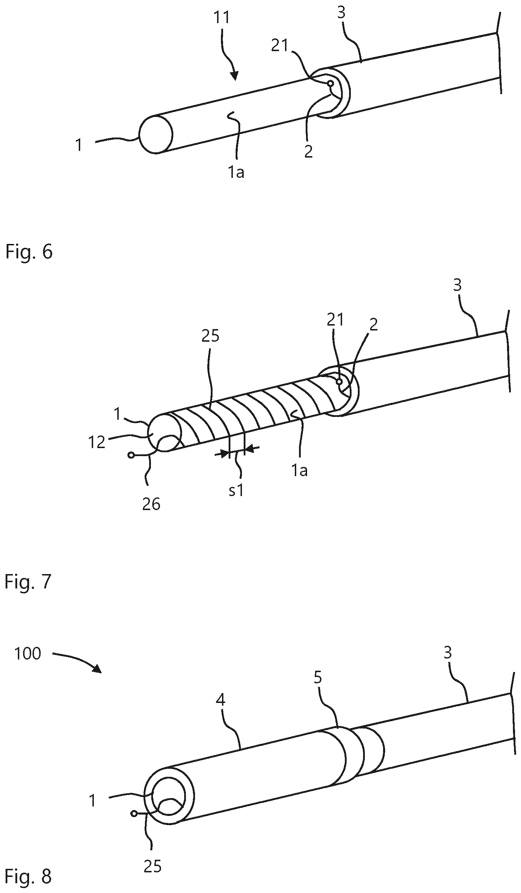

Weiterhin erfolgt ein Entfernen der Versorgungsleitung 2 in dem Endabschnitt 11. Hierbei wir die Versorgungsleitung 2 in dem Endabschnitt 11 von der Außenumfangsfläche 1a des Inneschlauchs 1 gelöst und abgewickelt. Nach einer Variante des Verfahrens wird die Versorgungsleitung 2 an einer Verbindungsstelle 21 durchtrennt, z.B. mittels einer Schneidvorrichtung. Dieser Zustand ist in Fig. 6 schematisch dargestellt. An der Verbindungsstelle 21 können die einzelnen Leiterstränge 20 der Versorgungsleitung 2 abisoliert werden, z.B. indem die Isolierschicht 22 in einem Endabschnitt der Leiterstränge entfernt wird.

Bei der Variante des Verfahrens, bei der die Versorgungsleitung 2 an der Verbindungsstelle 21 durchtrennt wird, wie oben beschrieben, wird n einem nächsten Schritt neues Versorgungsleitungsstück, welches im Folgenden als Ersatzversorgungsleitung 25 bezeichnet wird, elektrisch mit der Verbindungsstelle 21 verbunden. Die Ersatzversorgungsleitung 25 kann insbesondere identisch zu der Versorgungsleitung 2 ausgebildet sein und weist allgemein mehrere elektrische Leiter 20 auf. Zum elektrischen Verbinden werden die elektrischen Leiter 20 der Ersatzversorgungsleitung 25 elektrisch mit den an der Verbindungsstelle 21 freigelegten elektrischen Leitern 20 verbunden, z.B. durch Löten, Crimpen oder dergleichen.

Die Ersatzversorgungsleitung 25 wird in einem weiteren Schritt in dem Endabschnitt 11 spiralförmig um den Außenumfang 1a des Innenschlauchs 1 gewickelt. Dies erfolgt mit der ersten Schlaglänge s1, welche gegenüber der zweiten Schlaglänge s2 verkürzt ist. Optional kann die Ersatzversorgungsleitung 25 hierbei an der Außenumfangsfläche 1a des Innenschlauchs 1 fixiert werden, z.B. mittels eines Klebebands oder durch eine Klebstoffschicht, die auf die Außenumfangsfläche 1a aufgetragen wird. Fig. 7 zeigt den Zustand nach dem Anbringen der Ersatzversorgungsleitung 25 in dem Endabschnitt 11. Wie in Fig. 7 weiterhin beispielhaft gezeigt ist, kann ein Endabschnitt 26 der Ersatzversorgungsleitung 25 über das Ende 12 des Innenschlauchs 1 hinausstehen.

Nach einer alternativen Variante des Verfahrens wird nach dem Lösen der Verbindungsleitung 2 von dem Innenschlauch 1 in dessen Endabschnitt 11, die gelöste Verbindungsleitung 2 erneut spiralförmig um den Außenumfang 1a des Innenschlauchs 1 gewickelt, wobei dies mit der ersten Schlaglänge s1 erfolgt, welche gegenüber der zweiten Schlaglänge s2 verkürzt ist. Optional kann bei dieser Variante des Verfahrens ein Kürzen des Endabschnitts 11 des Innenschlauchs 1 erfolgen.

In einem optionalen weiteren Schritt, welcher beispielsweise vor oder nach dem Entfernen des Außenschlauchs 3 oder zu einem späteren Zeitpunkt durchgeführt werden kann, kann die Stützhülse 6 in den Innenschlauch 1 eingeführt werden, wobei diese derart positioniert wird, dass sie von dem freigelegten oder freizulegenden Endabschnitt 11 des Innenschlauchs 1 in den Mittelbereich 13 hineinragt, also allgemein in einen Bereich des Innenschlauchs 1 hineinragt, in welchem der Außenschlauch 3 nicht entfernt wird.

Nach dem Entfernen der Versorgungsleitung 2 im Endabschnitt 11 des Innenschlauchs 1, z.B. vor oder nach dem Umwickeln des Endabschnitt 11 des Innenschlauchs mit der Versorgungsleitung 2 oder der Ersatzversorgungsleitung 25, kann in einem weiteren optionalen Schritt der erste Abstandshalter 7A an dem Außenumfang 1a des Innenschlauchs 1 angebracht werden, z.B. um diesen herumgewickelt werden. Der erste Abstandshalter 7A wird hierbei in einem dem Außenschlauch 3 zugewandt gelegenen Ende des Endabschnitts 11 positioniert, wie dies in Fig. 1 beispielhaft gezeigt ist. In gleicher Weise kann alternativ oder zusätzlich zu dem ersten Abstandshalter 7A der zweite Abstandshalter 7B im Bereich des ersten Endes 12 des Innenschlauchs 1 am Außenumfang 1a des Innenschlauchs 1 angebracht werden, wie dies in Fig. 1 ebenfalls beispielhaft gezeigt ist.

Nach dem Entfernen des Außenschlauchs 3 im Endabschnitt 11, z.B. nach dem Umwickeln des Endabschnitts 11 mit der Versorgungsleitung 2 oder der Ersatzversorgungsleitung 25, kann in einem weiteren optionalen Schritt das Verbindungsstück 5 auf den Verbindungsendbereich 31 des Außenschlauchs 3 aufgesteckt und mit diesem verpresst oder allgemein verbunden werden. Beispielsweise kann der Innenschlauch 1 durch die Öffnung 51 des Verbindungsstücks 5 durchgeführt und der Verbindungsendbereich 31 des Außenschlauchs 3 in die Öffnung 51 eingeführt werden. Das Verpressen oder Fixieren des Außenschlauchs 3 an dem Verbindungsstück 5 kann direkt nach dem Einführen des Verbindungsendbereichs 31 erfolgen oder zu einem späteren Zeitpunkt.

In einem weiteren Schritt wird das Schutzschlauchstück 4 an dem Endabschnitt 11 angebracht. Insbesondere kann das Schutzschlauchstück 4 über den Endabschnitt 11 geschoben werden bzw. der Endabschnitt 11 des Innenschlauchs 1 wird in die durch die Innenumfangsfläche 4a des Schutzschlauchstücks 4 definierte Durchgangsöffnung eingeführt. Somit wird das Schutzschlauchstück 4 derart positioniert, dass es die Ersatzversorgungsleitung 25 oder die Versorgungsleitung 2 und den Innenschlauch 1 umschließt. Dieser Zustand ist beispielhaft und schematisch in den Fign. 1 und 8 dargestellt. Beim Anbringen des Schutzschlauchstücks 4 kann dieses mit seinem Verbindungsendbereich 41 gegebenenfalls in die Öffnung 51 des Verbindungsstücks 5 eingeführt werden und das Verbindungsstück 5 kann optional mit dem Verbindungsendbereich 41 verbunden, z.B. verpresst werden.

Optional kann abschließend noch ein Verbinden der Kupplungseinrichtung 8 mit dem Innenschlauch 1 und optional auch dem Schutzschlauchstück 4 erfolgen. Dies umfasst auch ein elektrisches Verbinden der Ersatzversorgungsleitung 25 mit der elektrischen Schnittstelle 80 der Kupplungseinrichtung 8. Beispielsweise kann der überstehende Endabschnitt 26 der Ersatzversorgungsleitung 25 in einem sich zwischen dem Hülsenstück 81 und dem Mantelstück 82 erstreckenden Raum zu der Leiterplatte 83 geführt und die Leiter 20 der Ersatzversorgungsleitung 25 oder der Versorgungsleitung 2 können mit der Leiterplatte 83 kontaktiert werden. Weiterhin erfolgt ein Einführen des Hülsenstücks 81 in den Innenschlauch 1 und ein Einführen des Schutzschlauchstücks 4 in das Mantelstück 82. Optional kann das Mantelstück 82 mit dem Schutzschlauchstück 4 verbunden, insbesondere verpresst werden.

Die beschriebenen Schlauchvorrichtungen 100 weisen somit einen Innenschlauch 1 auf, welcher in einem Endabschnitt 11 mit einer ersten, kurzen Schlaglänge s1 von einer Versorgungsleitung 25 umwickelt ist und im restlichen Bereich oder zumindest in einem sich anschließenden Mittelbereich 13 mit einer zweiten, längeren Schlaglänge s2 von der Versorgungsleitung 2 umwickelt ist. Nach einer Variante kann im Endabschnitt 11 des Innenschlauchs 1 eine Ersatzversorgungsleitung 25 nachträglich angebracht werden, indem eine dort bereits vorhandene Versorgungsleitung 2 entfernt wird und die neue Versorgungsleitung 25 mit kürzerer Schlaglänge um den Innenschlauch 1 gewickelt und elektrisch mit der im Rest des Innenschlauchs 1 vorgesehenen Versorgungsleitung verbunden wird. Alternativ kann die bestehende Versorgungsleitung 2 nach dem Lösen von dem Innenschlauch 1 erneut mit verkürzter Schlaglänge im Endabschnitt 11 um den Innenschlauch 1 gewickelt werden.

Auf diese Weise wird ein Schlauch 100 mit einer mechanisch widerstandsfähigen Versorgungsleitung 2, 25 realisiert, wobei auch dann, wenn der Schlauch nahe seinem Ende geknickt wird, das Risiko einer Beschädigung der elektrischen Leiter 20 der Versorgungsleitung 2, 25 minimiert ist. Der Schlauch 100 lässt sich zudem auf einfache Weise mit hoher Qualität herstellen.

## Patentansprüche

1. Schlauchvorrichtung (100) zur Reinigung und/oder Inspektion von Rohrleitungen, aufweisend:
einen Innenschlauch (1) zum Durchleiten eines Betriebsfluids;
eine Versorgungsleitung (2), welche mehrere elektrische Leiter (20) aufweist, wobei die Versorgungsleitung (2) in einem Endabschnitt (11) des Innenschlauchs (1) mit einer ersten Schlaglänge (s1) und zumindest in einem Mittelbereich (13) des Innenschlauchs (1) mit einer zweiten Schlaglänge (s2) spiralförmig um einen Außenumfang (1a) des Innenschlauchs (1) gewickelt ist, wobei die erste Schlaglänge (s1) kürzer ist als die zweite Schlaglänge (s2);
einen Außenschlauch (3), welcher den Innenschlauch (1) und die Versorgungsleitung (2) zumindest in dem Mittelbereich (13) umschließt; und
ein Schutzschlauchstück (4), welches den Innenschlauch (1) und die Versorgungsleitung (2) in dem Endabschnitt (11) umschließt.

2. Schlauchvorrichtung (100) nach Anspruch 1, wobei die erste Schlaglänge (s1) in einem Bereich zwischen 3 mm und 40 mm, insbesondere zwischen 10 mm und 20 mm und vorzugsweise zwischen 14 mm und 16 mm liegt.

3. Schlauchvorrichtung (100) nach Anspruch 1 oder 2, wobei die zweite Schlaglänge (s2) in einem Bereich zwischen 30 mm und 100 mm, insbesondere zwischen 40 mm und 60 mm und vorzugsweise zwischen 45 mm und 55 mm liegt.

4. Schlauchvorrichtung (100) nach einem der voranstehenden Ansprüche, zusätzlich aufweisend:
ein Verbindungsstück (5), welches den Außenschlauch (3) in einem dem Schutzschlauchstück (4) zugewandt gelegenen Verbindungsendbereich (31) und das Schutzschlauchstück (4) in einem dem Außenschlauch (3) zugewandt gelegenen Verbindungsendbereich (41) umschließt und mit den Verbindungsendbereichen (31; 41) jeweils verbunden, insbesondere verpresst ist.

5. Schlauchvorrichtung (100) nach Anspruch 4, zusätzlich aufweisend:
eine Stützhülse (6), welche in dem Innenschlauch (1) überlappend zu dem Verbindungsstück (5) angeordnet ist.

6. Schlauchvorrichtung (100) nach Anspruch 4 oder 5, zusätzlich aufweisend:
einen im Bereich des Verbindungsstücks (5) zwischen dem Schutzschlauchstück (4) und dem Innenschlauch (1) angeordneten ersten Abstandshalter (7A), welcher den Außenumfang (1a) des Innenschlauchs (1) zumindest einmal umschließt und sich parallel zu der Versorgungsleitung (2) erstreckt, wobei der erste Abstandshalter (7A) eine Dicke aufweist, die derart dimensioniert ist, dass der Abstandshalter (7A) von dem Außenumfang(1a) des Innenschlauchs (1) zumindest genausoweit vorsteht, wie die Versorgungsleitung (2).

7. Schlauchvorrichtung (100) nach einem der voranstehenden Ansprüche, zusätzlich aufweisend:
eine in dem Endabschnitt (11) mit dem Innenschlauch (1) verbundene Kupplungseinrichtung (8), welche zur mechanischen Kopplung mit einer Düse eingerichtet ist und eine elektrisch mit der Versorgungsleitung (2) verbundene elektrische Schnittstelle (80) aufweist.

8. Schlauchvorrichtung (100) nach Anspruch 7, wobei Kupplungseinrichtung (8) ein in den Innenschlauch (1) hineinragendes Hülsenstück (81) und ein mit einem Außenumfang (4b) des Schutzschlauchstücks (4) verbundenes, insbesondere verpresstes Mantelstück (82) aufweist.

9. Schlauchvorrichtung (100) nach Anspruch 7 oder 8, zusätzlich aufweisend: einen im Bereich des Mantelstücks (82) zwischen dem Schutzschlauchstück (4) und dem Innenschlauch (1) angeordneten zweiten Abstandshalter (7B), welcher den Außenumfang (1a) des Innenschlauchs (1) zumindest einmal umschließt und sich parallel zu der Versorgungsleitung (2) erstreckt, wobei der zweite Abstandshalter (7B) eine Dicke aufweist, die derart dimensioniert ist, dass der Abstandshalter (7B) von dem Außenumfang (1a) des Innenschlauchs (1) zumindest genausoweit vorsteht, wie die Versorgungsleitung (2).

10. Schlauchvorrichtung (100) nach Anspruch 8 oder 9, wobei die elektrische Schnittstelle (80) der Kupplungseinrichtung (8) eine Leiterplatte (83) mit einer Ausnehmung (84) aufweist, durch welche das Hülsenstück (81) hindurch ragt.

11. Schlauchvorrichtung (100) nach einem der voranstehenden Ansprüche, wobei das Schutzschlauchstück (4) aus einem Elastomermaterial (4M) gebildet ist, in welches ein Metallgewebe (40) eingebettet ist.

12. Verfahren zur Herstellung einer Schlauchvorrichtung (100) mit folgenden Schritten:
Ablängen eines Basisschlauchs (101), welcher einen Innenschlauch (1) zum Durchleiten eines Betriebsfluids, eine mit einer vorbestimmten Schlaglänge (s2) spiralförmig um den Innenschlauch (1) gewickelte elektrische Versorgungsleitung (2), welche mehrere elektrische Leiter (20) aufweist, und einen den Innenschlauch (1) und die Versorgungsleitung (2) umschließenden Außenschlauch (3) aufweist;
Freilegen der Versorgungsleitung (2) in einem Endabschnitt (11) des Innenschlauchs (1) durch Entfernen des Außenschlauchs (3) von dem Innenschlauch (1) in dem Endabschnitt (11);
Entfernen der Versorgungsleitung (2) von dem Innenschlauch (1) in dessen Endabschnitt (11),;
Umwickeln des Endabschnitts (11) des Innenschlauchs (1) mit der Versorgungsleitung (2), wobei die Versorgungsleitung (2) mit einer gegenüber der vorbestimmten Schlaglänge (s2) verringerten Schlaglänge (s1) spiralförmig um den Außenumfang (1a) des Innenschlauchs (1) gewickelt wird; und
Anbringen eines Schutzschlauchstücks (4) an dem Endabschnitt (11) derart, dass das Schutzschlauchstück (4) die Versorgungsleitung (25) und den Innenschlauch (1) umschließt.

13. Verfahren zur Herstellung einer Schlauchvorrichtung (100) mit folgenden Schritten:
Ablängen eines Basisschlauchs (101), welcher einen Innenschlauch (1) zum Durchleiten eines Betriebsfluids, eine mit einer vorbestimmten Schlaglänge (s2) spiralförmig um den Innenschlauch (1) gewickelte elektrische Versorgungsleitung (2), welche mehrere elektrische Leiter (20) aufweist, und einen den Innenschlauch (1) und die Versorgungsleitung (2) umschließenden Außenschlauch (3) aufweist;
Freilegen der Versorgungsleitung (2) in einem Endabschnitt (11) des Innenschlauchs (1) durch Entfernen des Außenschlauchs (3) von dem Innenschlauch (1) in dem Endabschnitt (11);
Entfernen der Versorgungsleitung (2) von dem Innenschlauch (1) in dessen Endabschnitt (11), wobei die Versorgungsleitung (2) an einer Verbindungsstelle (21) durchtrennt wird;
elektrisches Verbinden einer Ersatzversorgungsleitung (25), welche mehrere elektrische Leiter (20) aufweist, mit der Verbindungsstelle (21) der Versorgungsleitung (2);
Umwickeln des Endabschnitts (11) des Innenschlauchs (1) mit der Ersatzversorgungsleitung (25), wobei die Ersatzversorgungsleitung (25) mit einer gegenüber der vorbestimmten Schlaglänge (s2) verringerten Schlaglänge (s1) spiralförmig um den Außenumfang (1a) des Innenschlauchs (1) gewickelt wird; und
Anbringen eines Schutzschlauchstücks (4) an dem Endabschnitt (11) derart, dass das Schutzschlauchstück (4) die Ersatzversorgungsleitung (25) und den Innenschlauch (1) umschließt.

14. Verfahren nach Anspruch 12 oder 13, zusätzlich umfassend:
Verbinden, insbesondere Verpressen eines Verbindungsstücks (5) mit dem Außenschlauch (3) und dem Schutzschlauchstück (4).

15. Verfahren nach einem der Ansprüche 12 bis 14, zusätzlich umfassend:
Verbinden einer Kupplungseinrichtung (8), welche zur mechanischen Kopplung mit einer Düse eingerichtet ist und eine elektrische Schnittstelle (80) aufweist, mit dem Innenschlauch (1), wobei ein Hülsenstück (81) der Kupplungseinrichtung (8) mit dem Innenschlauch (1) verbunden und ein Mantelstück (82) der Kupplungseinrichtung (8) mit dem Schutzschlauchstück (4) verbunden, insbesondere verpresst wird.

16. Verfahren nach Anspruch 14 oder 15, zusätzlich umfassend:
Anbringen eines Abstandshalters (7A; 7B) zwischen dem Außenumfang (1a) des Innenschlauchs (1) und dem Schutzschlauchstück (4) im Bereich des Verbindungsstücks (5) und/oder des Mantelstücks (82) der Kupplungseinrichtung (8).

## Claims

1. Hose device (100) for cleaning and/or inspecting pipelines, having:
an inner hose (1) for passing an operating fluid therethrough;
a supply line (2) which has a plurality of electrical conductors (20), wherein the supply line (2) is wound spirally around an outer circumference (1a) of the inner hose (1) in an end portion (11) of the inner hose (1) with a first lay length (s1) and at least in a central region (13) of the inner hose (1) with a second lay length (s2), wherein the first lay length (s1) is shorter than the second lay length (s2);
an outer hose (3) which surrounds the inner hose (1) and the supply line (2) at least in the central region (13); and
a protective hose piece (4) which surrounds the inner hose (1) and the supply line (2) in the end portion (11).

2. Hose device (100) as claimed in claim 1, wherein the first lay length (s1) is in a range between 3 mm and 40 mm, in particular between 10 mm and 20 mm and preferably between 14 mm and 16 mm.

3. Hose device (100) as claimed in claim 1 or 2, wherein the second lay length (s2) is in a range between 30 mm and 100 mm, in particular between 40 mm and 60 mm and preferably between 45 mm and 55 mm.

4. Hose device (100) as claimed in any one of the preceding claims, additionally having:
a connecting piece (5) which surrounds the outer hose (3) in a connecting end region (31) located facing the protective hose piece (4) and the protective hose piece (4) in a connecting end region (41) located facing the outer hose (3) and is connected, in particular pressed, to the connecting end regions (31; 41) in each case.

5. Hose device (100) as claimed in claim 4, additionally having:
a support sleeve (6) which is disposed in the inner hose (1) overlapping the connecting piece (5).

6. Hose device (100) as claimed in claim 4 or 5, additionally having:
a first spacer (7A) which is disposed in the region of the connecting piece (5) between the protective hose piece (4) and the inner hose (1) and surrounds the outer circumference (1a) of the inner hose (1) at least once and extends in parallel with the supply line (2), wherein the first spacer (7A) has a thickness which is dimensioned such that the spacer (7A) protrudes from the outer circumference (1a) of the inner hose (1) at least to the same extent as the supply line (2).

7. Hose device (100) as claimed in any one of the preceding claims, additionally having:
a coupling unit (8) which is connected in the end portion (11) to the inner hose (1), is configured for mechanical coupling to a nozzle and has an electrical interface (80) which is electrically connected to the supply line (2).

8. Hose device (100) as claimed in claim 7, wherein the coupling unit (8) has a sleeve piece (81) protruding into the inner hose (1) and a casing piece (82) which is connected, in particular pressed, to an outer circumference (4b) of the protective hose piece (4).

9. Hose device (100) as claimed in claim 7 or 8, additionally having:
a second spacer (7B) which is disposed in the region of the casing piece (82) between the protective hose piece (4) and the inner hose (1), surrounds the outer circumference (1a) of the inner hose (1) at least once and extends in parallel with the supply line (2), wherein the second spacer (7B) has a thickness which is dimensioned such that the spacer (7B) protrudes from the outer circumference (1a) of the inner hose (1) at least to the same extent as the supply line (2).

10. Hose device (100) as claimed in claim 8 or 9, wherein the electrical interface (80) of the coupling unit (8) has a printed circuit board (83) having a cut-out (84), through which the sleeve piece (81) protrudes.

11. Hose device (100) as claimed in any one of the preceding claims, wherein the protective hose piece (4) is formed from an elastomer material (4M), into which a metal mesh (40) is embedded.

12. Method of producing a hose device (100) comprising the steps of:
cutting to length a base hose (101) which has an inner hose (1) for passing an operating fluid therethrough, an electric supply line (2) which is wound spirally around the inner hose (1) with a predetermined lay length (s2) and which has a plurality of electrical conductors (20), and an outer hose (3) which surrounds the inner hose (1) and the supply line (2);
exposing the supply line (2) in an end portion (11) of the inner hose (1) by removing the outer hose (3) from the inner hose (1) in the end portion (11);
removing the supply line (2) from the inner hose (1) in the end portion (11) thereof;
winding the supply line (2) around the end portion (11) of the inner hose (1), wherein the supply line (2) is wound spirally around the outer circumference (la) of the inner hose (1) with a lay length (s1) which is reduced compared to the predetermined lay length (s2); and
attaching a protective hose piece (4) to the end portion (11) such that the protective hose piece (4) surrounds the supply line (25) and the inner hose (1).

13. Method of producing a hose device (100) comprising the steps of:
cutting to length a base hose (101) which has an inner hose (1) for passing an operating fluid therethrough, an electric supply line (2) which is wound spirally around the inner hose (1) with a predetermined lay length (s2) and which has a plurality of electrical conductors (20), and an outer hose (3) which surrounds the inner hose (1) and the supply line (2);
exposing the supply line (2) in an end portion (11) of the inner hose (1) by removing the outer hose (3) from the inner hose (1) in the end portion (11);
removing the supply line (2) from the inner hose (1) in the end portion (11) thereof, wherein the supply line (2) is severed at a connecting point (21);
electrically connecting a replacement supply line (25) which has a plurality of electrical conductors (20), to the connecting point (21) of the supply line (2);
winding the replacement supply line (25) around the end portion (11) of the inner hose (1), wherein the replacement supply line (25) is wound spirally around the outer circumference (1a) of the inner hose (1) with a lay length (s1) which is reduced compared to the predetermined lay length (s2); and
attaching a protective hose piece (4) to the end portion (11) such that the protective hose piece (4) surrounds the replacement supply line (25) and the inner hose (1).

14. Method as claimed in claim 12 or 13, additionally comprising:
connecting, in particular pressing, a connecting piece (5) to the outer hose (3) and the protective hose piece (4).

15. Method as claimed in any one of claims 12 to 14, additionally comprising:
connecting a coupling unit (8), which is configured for mechanical coupling to a nozzle and has an electrical interface (80), to the inner hose (1), wherein a sleeve piece (81) of the coupling unit (8) is connected to the inner hose (1) and a casing piece (82) of the coupling unit (8) is connected, in particular pressed, to the protective hose piece (4).

16. Method as claimed in claim 14 or 15, additionally comprising:
attaching a spacer (7A; 7B) between the outer circumference (1a) of the inner hose (1) and the protective hose piece (4) in the region of the connecting piece (5) and/or the casing piece (82) of the coupling unit (8).

## Revendications

1. Dispositif de tuyau souple (100) pour le nettoyage et/ou l'inspection de canalisations, comportant :
un tuyau souple intérieur (1) pour le passage d'un fluide de travail ;
un fil d'alimentation (2) comportant plusieurs conducteurs électriques (20), le fil d'alimentation (2) étant enroulé en spirale autour d'une circonférence extérieure (1a) du tuyau souple intérieur (1) avec une première longueur de pas (s1) dans une première partie d'extrémité (11) du tuyau souple intérieur (1) et avec une seconde longueur de pas (s2) dans au moins une zone centrale (13) du tuyau souple intérieur (1), la première longueur de pas (s1) étant plus courte que la seconde longueur de pas (s2) ;
un tuyau souple extérieur (3) qui entoure le tuyau souple intérieur (1) et le fil d'alimentation (2) au moins dans la zone centrale (13) ; et
un morceau de tuyau souple de protection (4) qui entoure le tuyau souple intérieur (1) et le fil d'alimentation (2) dans la partie d'extrémité (11).

2. Dispositif de tuyau souple (100) selon la revendication 1, dans lequel la première longueur de pas (s1) est dans une plage comprise entre 3 mm et 40 mm, en particulier entre 10 mm et 20 mm et de préférence entre 14 mm et 16 mm.

3. Dispositif de tuyau souple (100) selon la revendication 1 ou 2, dans lequel la seconde longueur de pas (s2) est dans une plage comprise entre 30 mm et 100 mm, en particulier entre 40 mm et 60 mm et de préférence entre 45 mm et 55 mm.

4. Dispositif de tuyau souple (100) selon l'une des revendications précédentes, comportant en outre :
une pièce de raccordement (5) qui entoure le tuyau souple extérieur (3) dans une zone d'extrémité de raccordement (31) dirigée vers le morceau de tuyau souple de protection (4) et qui entoure le morceau de tuyau souple de protection (4) dans une zone d'extrémité de raccordement (41) dirigée vers le tuyau souple extérieur (3), et est respectivement assemblée, en particulier sertie, avec les zones d'extrémité de raccordement (31 ; 41).

5. Dispositif de tuyau souple (100) selon la revendication 4, comportant en outre :
une douille d'appui (6) qui est agencée dans le tuyau souple intérieur (1) de manière chevauchante par rapport à la pièce de raccordement (5).

6. Dispositif de tuyau souple (100) selon la revendication 4 ou 5, comportant en outre :
une première entretoise (7A) agencée dans la zone de la pièce de raccordement (5) entre le morceau de tuyau souple de protection (4) et le tuyau souple intérieur (1), laquelle première entretoise entoure au moins une fois la circonférence extérieure (1a) du tuyau souple intérieur (1) et s'étend parallèlement au fil d'alimentation (2), dans lequel la première entretoise (7A) a une épaisseur qui est dimensionnée de telle sorte que l'entretoise (7A) fait saillie à partir de la circonférence extérieure (1a) du tuyau souple intérieur (1) au moins aussi loin que le fil d'alimentation (2).

7. Dispositif de tuyau souple (100) selon l'une des revendications précédentes, comportant en outre :
un dispositif d'accouplement (8) raccordé au tuyau souple intérieur (1) dans la partie d'extrémité (11), lequel dispositif d'accouplement est conçu pour le couplage mécanique avec une buse et comporte une interface électrique (80) électriquement raccordée au fil d'alimentation (2).

8. Dispositif de tuyau souple (100) selon la revendication 7, dans lequel le dispositif d'accouplement (8) comporte une partie de douille (81) faisant saillie dans le tuyau souple intérieur (1) et une partie de fourreau (82) assemblée, en particulier sertie, avec une circonférence extérieure (4b) du morceau de tuyau souple de protection (4).

9. Dispositif de tuyau souple (100) selon la revendication 7 ou 8, comportant en outre :
une seconde entretoise (7B) agencée dans la zone de la partie de fourreau (82) entre le morceau de tuyau souple de protection (4) et le tuyau souple intérieur (1), laquelle seconde entretoise entoure au moins une fois la circonférence extérieure (1a) du tuyau souple intérieur (1) et s'étend parallèlement au fil d'alimentation (2), dans lequel la seconde entretoise (7B) a une épaisseur qui est dimensionnée de telle sorte que l'entretoise (7B) fait saillie à partir de la circonférence extérieure (1a) du tuyau souple intérieur (1) au moins aussi loin que le fil d'alimentation (2).

10. Dispositif de tuyau souple (100) selon la revendication 8 ou 9, dans lequel l'interface électrique (80) du dispositif d'accouplement (8) comporte une plaque conductrice (83) avec un évidement (84) à travers lequel la partie de douille (81) fait saillie.

11. Dispositif de tuyau souple (100) selon l'une des revendications précédentes, dans lequel le morceau de tuyau souple de protection (4) est formé à partir d'une matière élastomère dans laquelle une toile métallique (40) est incorporée.

12. Procédé pour fabriquer un dispositif de tuyau souple (100), comportant les étapes suivantes consistant à :
couper à la longueur un tuyau souple de base (101) qui comporte un tuyau souple intérieur (1) pour le passage d'un fluide de travail, un fil d'alimentation électrique (2) enroulé en spirale autour du tuyau souple intérieur (1) avec une longueur de pas (s2) prédéterminée, lequel fil d'alimentation comporte plusieurs conducteurs électriques (20), et comporte un tuyau souple extérieur (3) entourant le tuyau souple intérieur (1) et le fil d'alimentation (2) ;
dénuder le fil d'alimentation (2) dans une partie d'extrémité (11) du tuyau souple intérieur (1) en retirant le tuyau souple extérieur (3) du tuyau souple intérieur (1) dans la partie d'extrémité (11) ;
retirer le fil d'alimentation (2) du tuyau souple intérieur (1) dans cette partie d'extrémité (11) ;
enrouler la partie d'extrémité (11) du tuyau souple intérieur (1) avec le fil d'alimentation (2), le fil d'alimentation (2) étant enroulé en spirale autour de la circonférence extérieure (1a) du tuyau souple intérieur (1) avec une longueur de pas (s1) réduite par rapport à la longueur de pas (s2) prédéterminée ; et
fixer un morceau de tuyau souple de protection (4) sur la partie d'extrémité (11), de telle sorte que le morceau de tuyau souple de protection (4) entoure le fil d'alimentation (2) et le tuyau souple intérieur (1).

13. Procédé pour fabriquer un dispositif de tuyau souple (100), comportant les étapes suivantes consistant à :
couper à la longueur un tuyau souple de base (101) qui comporte un tuyau souple intérieur (1) pour le passage d'un fluide de travail, un fil d'alimentation électrique (2) enroulé en spirale autour du tuyau souple intérieur (1) avec une longueur de pas (s2) prédéterminée, lequel fil d'alimentation comporte plusieurs conducteurs électriques (20), et comporte un tuyau souple extérieur (3) entourant le tuyau souple intérieur (1) et le fil d'alimentation (2) ;
dénuder le fil d'alimentation (2) dans une partie d'extrémité (11) du tuyau souple intérieur (1) en retirant le tuyau souple extérieur (3) du tuyau souple intérieur (1) dans la partie d'extrémité (11) ;
retirer le fil d'alimentation (2) du tuyau souple intérieur (1) dans cette partie d'extrémité (11), le fil d'alimentation (2) étant coupé à un point de jonction (21) ;
raccorder électriquement un fil d'alimentation de remplacement (25) qui comporte plusieurs conducteurs électriques (20), avec le point de jonction (21) du fil d'alimentation (2) ;
enrouler la partie d'extrémité (11) du tuyau souple intérieur (1) avec le fil d'alimentation de remplacement (25), le fil d'alimentation de remplacement (25) étant enroulé en spirale autour de la circonférence extérieure (1a) du tuyau souple intérieur (1) avec une longueur de pas (s1) réduite par rapport à la longueur de pas (s2) prédéfinie ; et
fixer un morceau de tuyau souple de protection (4) sur la partie d'extrémité (11), de telle sorte que le morceau de tuyau souple de protection (4) entoure le fil d'alimentation de remplacement (25) et le tuyau souple intérieur (1).

14. Procédé selon la revendication 12 ou 13, comportant en outre l'étape consistant à :
assembler, en particulier sertir, une pièce de raccordement (5) avec le tuyau souple extérieur (3) et le morceau de tuyau souple de protection (4).

15. Procédé selon l'une des revendications 12 à 14, comprenant en outre l'étape consistant à :
raccorder un dispositif d'accouplement (8) qui est conçu pour un couplage mécanique avec une buse et comporte une interface électrique (80), avec le tuyau souple intérieur (1), une partie de douille (81) du dispositif d'accouplement (8) étant raccordée au tuyau souple intérieur (1) et une partie de fourreau (82) du dispositif d'accouplement (8) étant assemblée, en particulier sertie, avec le morceau de tuyau souple de protection (4).

16. Procédé selon la revendication 14 ou 15, comportant en outre l'étape consistant à :
appliquer une entretoise (7A ; 7B) entre la circonférence extérieure (1a) du tuyau souple intérieur (1) et le morceau de tuyau souple de protection (4) dans la zone de la pièce de raccordement (5) et/ou de la partie de fourreau (82) du dispositif de couplage (8).
